# EUROPEAN PATENT APPLICATION

(11) **EP 4 321 252 A1**
(43) Date of publication of application: **14.02.2024**
(21) Application number: 23020366.3
(22) Date of filing: 03.08.2023
(51) Int. Cl.: B03C 3/49, B03C 3/74

(54) **DEVICE AND METHOD FOR ELECTROSTATIC PRECIPITATION OF GASES**

(30) Priority: 05.08.2022 PL 44195222
(71) Applicant: ELFIPROJEKT Sp. z o.o., 80-231 Gdansk (PL)
(72) Inventor: Podlinski, Janusz, 80-180 Gdansk (PL); Tanski, Mateusz, 80-333 Gdansk (PL)
(74) Representative: Matyka, Malgorzata

(57) **Abstract**

The present invention is a device and method for electrostatic precipitation of gases, i.e. the removal of solid and liquid particles from the flowing gas stream. In particular, this device can be used for the precipitation of flue gases generated by the low power solid fuel boilers.

## Description

The present invention relates to a device and a method for electrostatic precipitation of gases, more specifically, to a device for a removing of solid and liquid particles from a flowing gas stream. In particular, this device and method can be used for the precipitation of flue gases generated by the low power solid fuel boilers.

In the present invention, the pollution particles are removed from the gas by the electrostatic effect. The device consists of a discharge electrode and a collecting electrode. A high DC voltage is applied to the discharge electrode, thereby generating a corona discharge on the surface of the discharge electrode, and the collecting electrode is grounded. The corona discharge causes the ionization of the gas, and the generated ions are accelerated in the electric field between the discharge and collecting electrode, which next collide with the pollution particles suspended in the gas, resulting in the electrostatic charging of those particles. Due to the electrostatic force, the electrostatically charged particles migrate towards the collecting electrode and accumulate on its surface. The pollutant particles accumulated on the collecting electrode, as well as on the discharge electrode and on the high-voltage insulator, are mechanically removed. The precipitated gas escapes from the device.

Previous patent PL 232565 discloses a device and method for electrostatic precipitation of gases, in particular for precipitation of flue gases generated by the low power solid fuel boilers, wherein the main components of the device are being cleaned from the accumulated pollutant particles by rotating the discharge electrode. According to the invention, in the centre of the device, via which the precipitated gas is flowing, there is a discharge electrode and a ceramic or plastic high-voltage insulator with a threaded hole in its centre, mounted on the discharge electrode. A brush is attached to the insulator to removing the pollutant particles accumulated on a surface of the insulator and on an inner wall of the collecting electrode. The complicated design of the device, especially the rotating threaded insulator, makes the invention difficult to apply.

Previous patent CN 110124867 A discloses a device for electrostatic precipitation of gases, wherein the device consists of a triangular main body and angle bars. The cleaning element is attached to at least one of the angle bars and also to the bar located at the lower edge of the anode plate. This device is intended to prevent the accumulation of the pollution particles by means of cleaning a main body of the precipitator.

Previous patent KR 102270824 B discloses a device for electrostatic precipitation, comprising a housing, a filtration unit located at the gas inlet, a dust collection unit, and a cleaning water container located below the filtration unit. The cleaning elements are located in the filtration unit and in the dust collection unit.

Previous patent KR 102118795 B discloses a device of which discharge electrode, collector and insulator chamber, which is separated from the main gas stream flow, are being cleaned. The precipitation process takes place simultaneously with the cleaning of the discharge electrode and precipitation unit from the pollution particles that may get into the insulator chamber. The insulator is being cleaned by the jet of water and compressed air from the nozzle.

The objective of the present invention is to provide a device for electrostatic precipitation of the pollution particles from a gas stream.

In a conventional electrostatic precipitator, the pollution particles which accumulated on the components of the device, especially on the collecting electrode, the discharge electrode and the high-voltage insulator, affect the corona discharge, reducing the filtration efficiency. The present invention solves this problem.

In accordance with the present invention, there is a device for electrostatic precipitation of gases, comprising: a main body forming a collecting electrode, a discharge electrode, an insulator and a brush, wherein linear traverses (10) are mounted parallel to the discharge electrode (2) inside a main body (1), on which the brush (7) with a cleaning ring (6) is mounted; it also comprises a high-voltage insulator consisting of two elements: a fixed insulator (3) permanently attached to the main body (1) and a movable insulator (4) in the form of a tube.

A device where the brush (7) has stop rods (8), permanently attached to the brush (7), which pass through the through holes in the flange of the movable insulator (4).

A device, wherein the fixed insulator (3) is attached to the main body (1) by a mounting element (5) having a through holes.

The object of the present invention is also a method of operation of the device, where the brush moves:
- along the linear traverses, as well as along the main body of the device, removing the pollution particles that accumulated on the collecting electrode.
- along the movable insulator, removing the pollution particles accumulated on this insulator, and forcing its movement along the discharge electrode, removing the pollution particles accumulated on this electrode.

A method where a cleaning ring attached to a brush moves along a movable insulator, cleaning this insulator of accumulated pollutant particles.

A method where the movement of the brush along the movable insulator is limited by the stop bars, when the brush is at the end of the movable insulator; the stop bars rest against the insulator flange forcing the movable insulator to move with the brush along the discharge electrode.

The advantage of the present invention is its design, which uses movable mechanism for cleaning the collecting electrode, the discharge electrode and the high-voltage insulator from pollution particles. Thus, by regularly cleaning these components, the negative effect of the accumulated pollution particles can be significantly reduced, ensuring high efficiency of the precipitation process.

As used above and in the specification and claims, the term shall have the following meaning:
**Through holes** - means through holes for flue gases;
**Linear guides** - the same as linear traverses;
**Main body** - is a collecting electrode.

### Description of the figures:

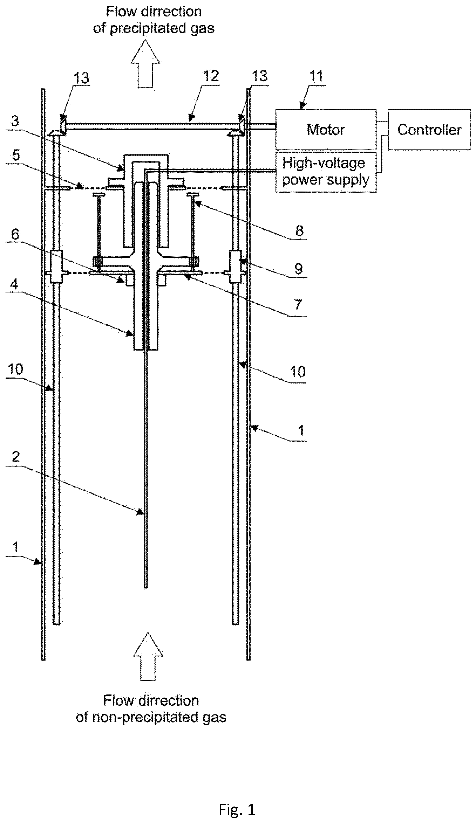

**Fig. 1** is a cross-section of the device with the brush and the movable insulator in the upper position.

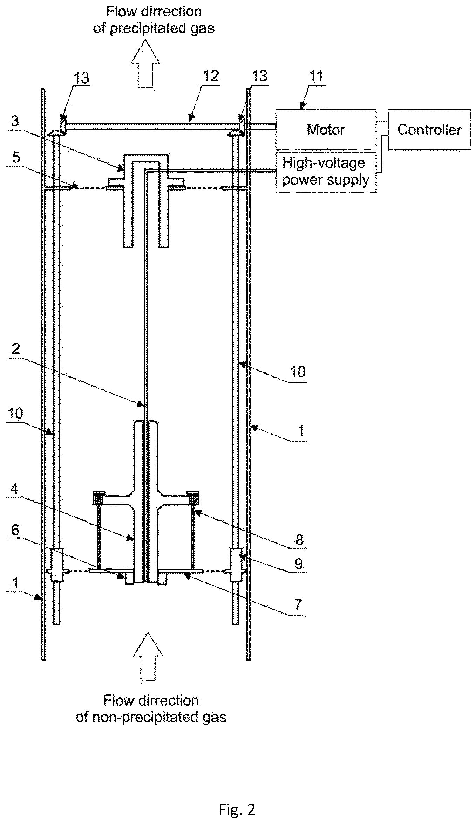

**Fig. 2** is a cross-section of the device with the brush and the movable insulator in the bottom position.
**Fig. 3** is a cross-section of the device with the side gas inlet and outlet.

### Description of reference numerals:

1- main body
2 - discharge electrode
3 - fixed insulator
4 - movable insulator
5 - element for mounting a fixed insulator
6 - cleaning ring
7 - brush
8 - limiting rod
9 - linear sleeve
10 - linear traverse/guides
11 - electric motor
12 - drive shaft
13 - gear set

The invention is illustrated by the following example, which is not a limitation of the invention.

### Example:

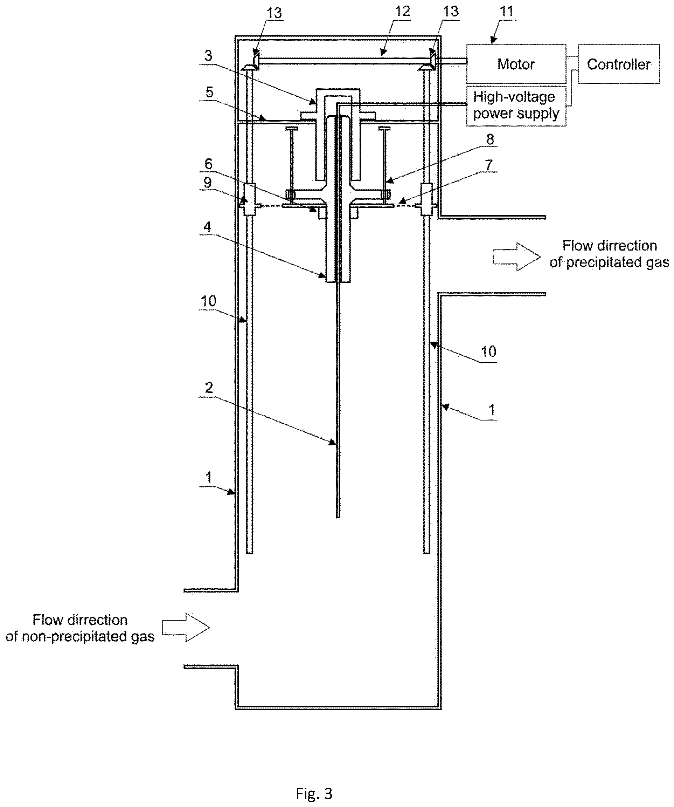

In accordance with the present invention of a device for electrostatic precipitation of gases, in particular of flue gases generated by solid fuel boilers, comprises a main body (1) which is made in the form of a metal tube which is grounded and acts as a collecting electrode, concentrically with the main body is a stationary discharge electrode (2) in the form of a rod, smooth or threaded, to which a high voltage is applied from a high-voltage power supply. As a result of the voltage applied to the discharge electrode (2), a corona discharge is generated. The discharge electrode (2) is mounted in the device and electrically isolated from the body (1) by means of a high-voltage insulator, which may be made of ceramic and consists of two parts:
a) a fixed insulator (3) - permanently attached to the main body of the device by a mounting element (5) containing through holes. According to a variation of the device shown in Fig. 3, the mounting element (5) need not contain through holes;
b) a movable insulator (4) - in the form of a flanged tube which can move along the discharge electrode (2).

A cleaning ring (6) is mounted onto the movable insulator (4), which itself can move along the insulator in such a way that its movement scrapes and removes the pollution particles accumulated on the insulator (4). The cleaning ring (6) is permanently attached to the brush (7). The movement of the brush (7) along the movable insulator (4) is limited by stop bars (8) which are permanently attached to the brush (7) and pass through the through holes in the flange of the movable insulator (4) in such a way that when the brush (7) is at the end of the insulator, the stop bars (8) rest against the flange of the insulator (4) and force its movement together with the brush (7) along the discharge electrode (2). The brush (7) is attached to the main body (1) of the device by means of linear traverse (10), which can be made in the form of lead screws with mounted linear sleeve (9) made in the form of a lead screw nut, which are fixed to the brush (7) in such a way that the rotation of the lead screw around their axis causes the linear movement of the linear sleeve (9) together with the brush (7) along the axis of the main body (1). The movement of the brush (7) along the main body (1) cleans the inside wall of the collecting electrode from pollution particles. The rotation of the lead screws of the linear traverse (10) is driven by an electric motor (11) through a drive shaft (12) and a gear set (13), so that both lead screws rotate synchronously at the same angular speed.

The operation of the device is automated by a controller. The controller controls the voltage applied to the discharge electrode (2) during the precipitation and also controls the cleaning process of the collecting electrode, the discharge electrode and the insulator, by controlling the operation of the motor (11) that drives the movement of the linear traverse (10) that drives the brush (7).

## Claims

1. A device for electrostatic precipitation of gases, comprising a main body constituting a collecting electrode, a discharge electrode, an insulator and a brush, **characterized in that** inside the main body (1), which is in the form of a tube, there are a linear traverse (10), attached parallel to the discharge electrode (2), on which there is a brush (7) with a cleaning ring (6); it also comprises an insulator, consisting of two parts: a fixed insulator (3) permanently attached to the main body (1) and a movable insulator (4) having the form of a tube.

2. The device in accordance with claim 1, **characterized in that** the brush (7) has stop rods (8), permanently attached to the brush (7), and pass through the through holes in the flange of the movable insulator (4).

3. The device in accordance with claim 1, **characterized in that** the stationary insulator (3) is attached to the main body (1) by means of a mounting element (5) containing through holes.

4. The method of operation of device in accordance with claim 1, **characterized in that** the brush moves:
- along the linear traverse and along the main body, removing the particles accumulated on the collecting electrode;
- along the movable insulator, removing the particles accumulated on this insulator and forcing its movement along the discharge electrode, removing the particles deposited on this discharge electrode.

5. The method of operation of device in accordance with claim 4, **characterized in that** the cleaning ring attached to the brush moves along the movable insulator, thereby cleaning the insulator of accumulated particles.

6. The method of operation of device in accordance with claim 4, **characterized in that** the brush moves along the insulator and the movement of the brush is limited by the stop bars; and when the brush is at the end of the movable insulator the stop bars rest against the insulator flange forcing its movement together with the brush along the discharge electrode.
